# EUROPEAN PATENT APPLICATION

(11) **EP 4 692 739 A1**
(43) Date of publication of application: **11.02.2026**
(21) Application number: 25194662.0
(22) Date of filing: 07.08.2025
(51) Int. Cl.: G01F 23/292

(54) **ELECTRO-OPTIC SENSOR TO IDENTIFY MULTIPLE MEDIUMS**

(30) Priority: 08.08.2024 US 202463680862 P
(71) Applicant: Eaton Intelligent Power Limited, Dublin 4 (IE)
(72) Inventor: KOPANSKY, Gregory, Dublin, D04 Y0C2 (IE); WILLIAMS, Michael, Dublin, D04 Y0C2 (IE)
(74) Representative: Jolliffe, Jack Louis

(57) **Abstract**

A sensor system includes one or more sensors managed by a controller. Each sensor within the sensor system includes a signal emitter configured to send a signal through a prism to an interface surface and a signal detector configured to receive a signal reflected through the prism from the interface surface. The controller analyzes the power level of the reflected signal to determine the medium (e.g., air, water, or fuel) that surrounds the interface surface. In certain examples, the presence of each of air, water, and fuel will result in a unique, respective power level of the reflected signal.

## Description

### CROSS-REFERENCE TO RELATED APPLICATIONS

This application claims the benefit of U.S. Provisional Application No. 63/680,862, filed on August 8, 2024, the disclosure of which is incorporated by reference in its entirety.

### BACKGROUND

Electro-optical liquid sensors can be used to detect the presence or absence of a particular liquid or a certain amount of liquid. One known sensor type includes a light source, a prism, and a light detector. In some known electro-optic liquid sensors, light emitted from the light source may be returned to the light detector by the prism only if no liquid is present. If liquid is present, the light detector observes a loss of signal. In other known electro-optic liquid sensors, the light may be returned by the prism only if a particular liquid is present.

### SUMMARY

In accordance with certain aspects of the disclosure, a method of monitoring a fuel tank includes providing a plurality of sensors at respective levels within a fuel tank; for each sensor, shining light through a prism of the sensor and obtaining a reflected signal; and for each sensor, determining which of at least three mediums is disposed within the fuel tank at the respective level of the sensor based on a characteristic (e.g., light power level) of the reflected signal.

In accordance with certain aspects of the disclosure, a sensor system for a fuel tank of a vehicle includes a first optical sensor disposed at a first level within the fuel tank; a second optical sensor disposed at a second level within the fuel tank; and a third optical sensor disposed at a third level within the fuel tank. Each of the first, second, and third optical sensors includes a signal input path, a signal output path, and a prism. The respective prism of each of the first, second, and third sensors is configured to: reflect a first non-zero portion of a signal from the input path towards the output path when the respective prism is immersed in air or inert gas; reflect a second non-zero portion of a signal from the input path towards the output path when the respective prism is immersed in water; and reflect a third non-zero portion of a signal from the input path towards the output path when the respective prism is immersed in fuel. The first, second, and third non-zero portions are different from each other.

In accordance with certain aspects of the disclosure, a sensor system includes a prism; a signal source; a signal detector; and a controller. The prism has a coefficient of refraction of between 1.5 and 1.6. The signal source is configured to shine a signal along an input path towards the prism. The signal detector is configured to receive a reflected signal along an output path from the prism. The controller is configured to manage the signal source and the signal detector.

A variety of additional inventive aspects will be set forth in the description that follows. The inventive aspects can relate to individual features and to combinations of features. It is to be understood that both the forgoing general description and the following detailed description are exemplary and explanatory only and are not restrictive of the broad inventive concepts upon which the embodiments disclosed herein are based.

### BRIEF DESCRIPTION OF THE DRAWINGS

The accompanying drawings, which are incorporated in and constitute a part of the description, illustrate several aspects of the present disclosure. A brief description of the drawings is as follows:
FIG. 1 is a schematic block diagram of an example monitoring system for a vehicle fuel tank, the monitoring system including sensors and a system controller arrangement.
FIG. 2 shows the monitoring system of FIG. 1 with the sensor disposed fully within the fuel tank.
FIG. 3 shows an interface of one of the sensors of FIG. 1 disposed within a medium within the fuel tank of FIG. 1, the sensor having an emitted signal being at least partially reflected towards a signal detector.
FIG. 4 shows a portion of the emitted signal refracting into a first medium (e.g., fuel) to provide a reflected signal having a first power level.
FIG. 5 shows a portion of the emitted signal refracting into a second medium (e.g., water) to provide a reflected signal having a second power level.
FIG. 6 shows a portion of the emitted signal not refracting into a third medium (e.g., air) to provide a reflected signal having a third power level that is equal or almost equal to the power level of the emitted signal.
FIG. 7 is a schematic block diagram of an example implementation of the system controller arrangement of FIG. 1.
FIG. 8 is a flowchart illustrating an example implementation of a sensor operation method using the sensor and the system controller arrangement of FIG. 1.
FIG. 9 is a flowchart illustrating an example implementation of a sensor error checking method using the sensor and the system controller arrangement of FIG. 1.

### DETAILED DESCRIPTION

Reference will now be made in detail to exemplary aspects of the present disclosure that are illustrated in the accompanying drawings. Wherever possible, the same reference numbers will be used throughout the drawings to refer to the same or like parts.

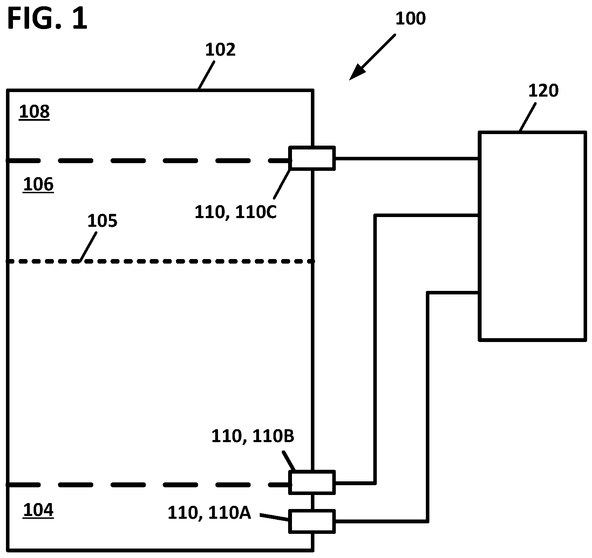

FIG. 1 illustrates a monitoring system 100 for a vehicle fuel tank 102 (e.g., for an aircraft fuel tank). The monitoring system 100 includes a plurality of sensors 110 managed by a control system 120 as will be described in more detail herein. The sensors 110 are disposed at various levels within the fuel tank 102 so that a portion of each sensor 110 interfaces with a medium 105 (e.g., air, water, fuel, etc.) disposed within the fuel tank 102 at the respective level. One or more of the sensors 110 is configured to identify the type of medium 105 with which the sensor 110 is interfacing as one of at least three types of mediums 105. For example, the sensor 110 may be configured to identify the medium 105 with which the sensor 110 is interfacing as being air, water, or fuel.

In certain implementations, the fuel tank 102 has three main regions: a first region 104 at the bottom of the fuel tank 102, a second region 106 above the first region 104, and a third region 108 above the second region 106. In certain examples, a sensor 110A, 110B, 110C is disposed at each of these regions 104, 106, 108, respectively. In other examples, one or more of the sensors 110A-110C may be disposed at interfaces between the regions 104, 106, 108. In general, when the fuel tank is filled with fuel, the fuel sits at the bottom of the fuel tank 102 and air or other inert gas is disposed at the top of the fuel tank 102.

In certain examples, the third sensor 110C is positioned at the interface between the second and third regions 106, 108. Accordingly, the third sensor 110C may indicate when the fuel tank 102 has been filled with a maximum threshold amount of fuel (e.g., when the sensor 110C begins sensing fuel instead of air or other inert gas). In an example, a filling process for the fuel tank 102 may be ceased when the third sensor 110C triggers.

In certain examples, the second sensor 110B is positioned at the interface between the first and second regions 104, 106. Accordingly, the second sensor 110B may indicate when the fuel tank 102 has been emptied to a minimum threshold amount of fuel (e.g., when the sensor 110C begins sensing air or other insert gas instead of fuel). In an example, a warning indicator may activate or warning message may be communicated to a pilot or other user when the second sensor 110B triggers.

In certain examples, the first sensor 110A is positioned within the first region 104. At various times during operation of the airplane or other vehicle, water accumulate within the fuel tank 102. For example, humid air can enter the fuel tank 102 and condense during landing due to changes in ambient pressure and temperature. The first sensor 110A may indicate when a predetermined threshold of water has entered the fuel tank 102 (e.g., when the first sensor 110A begins sensing water instead of fuel). Accordingly, readings from the first sensor 110A can be used to schedule draining of the fuel tank 102 and refilling of the fuel tank 102 with pure fuel.

In certain implementations, the sensors 110 are coupled (e.g., through cabled connections, through Wi-Fi, Bluetooth^{®}, or other wireless connection, etc.) to a system controller arrangement 120, which manages operations of the sensors and/or processes the sensor readings. The system controller arrangement 120 includes one or more controllers. For example, the system controller arrangement 120 can be implemented by a distributed network of controllers. Details of the system controller arrangement 120 will be described in more detail herein.

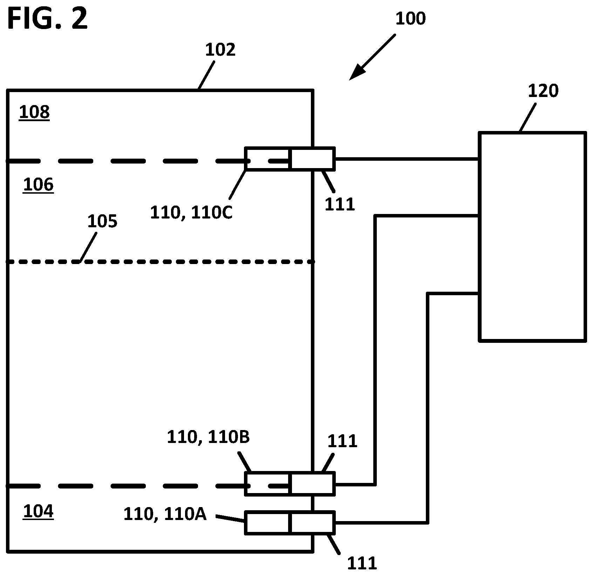

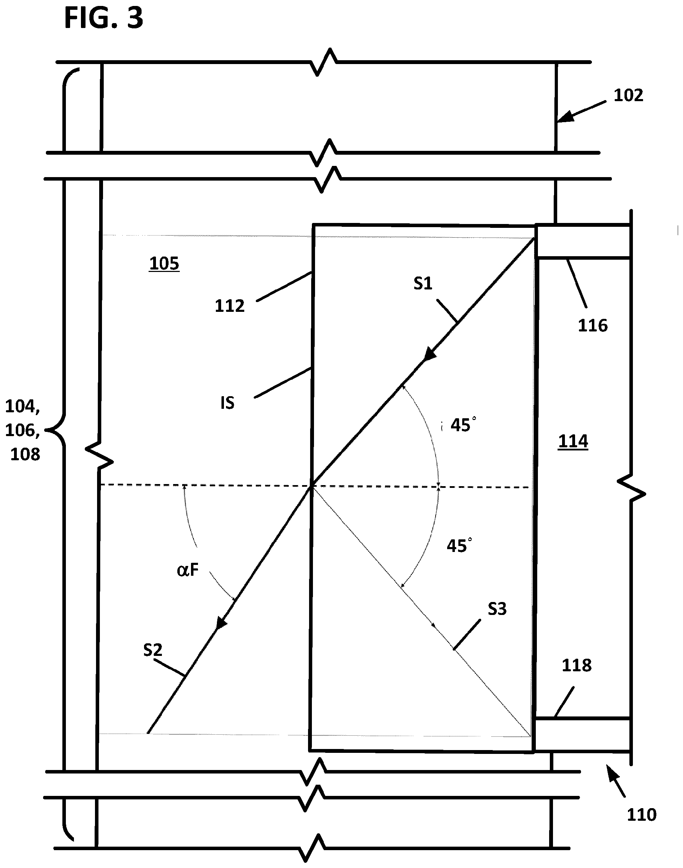

Referring now to FIG. 3, in certain implementations, the same type of sensor 110 can be used to implement each of the first, second, and third sensors 110A-110C (i.e., all three sensors 110A-110C have the same physical make-up). Each sensor 110 includes a prism 112 held by a sensor body 114 (e.g., see FIG. 3). The sensor body 114 is configured to mount the fuel tank 102 so that at least part of the prism 112 is disposed inside of the fuel tank 102. In some examples, the sensor 110 penetrates a wall of the fuel tank 102 so that an output from the sensor body 114 extends outside of the fuel tank 102 (e.g., see FIG. 1). In other examples, the sensor 110 is disposed fully within the fuel tank 102 and a separate connector 111 penetrates the fuel tank 102 to direct output of the sensor 110 towards the system controller arrangement 120 (e.g., see FIG. 2).

The sensor 110 also includes a signal source 116 and a signal receiver 118. The signal source 116 is configured to direct an optical signal through the prism 112. The signal source 116 is managed (e.g., turned on and off) by the system controller arrangement 120. The prism 112 is configured to reflect at least part of the signal towards the signal receiver 118. Readings from the signal receiver 118 are directed to the system controller arrangement 120 (e.g., for processing and/or reporting).

In certain implementations, the signal source 116 includes an optical fiber or other optical pathway routed to the sensor 110 from a remote optical emitter (e.g., a laser). In certain implementations, the signal receiver 118 includes an optical fiber or other optical pathway routed from the sensor 110 to a remote optical detector that is configured to convert a light signal into an electrical signal. Accordingly, components requiring power (e.g., the optical emitter and/or the optical detector) are disposed remote from the fuel tank 102. In other implementations, however, the signal source 116 can include an optical emitter disposed at the sensor 110 and/or the signal receiver 118 can include an optical detector disposed at the sensor 110.

In accordance with certain aspects of the disclosure, the medium 105 (e.g., air, water, fuel, etc.) surrounding the prism 112 affects how much of the optical signal from the signal source 116 is reflected back towards the signal detector 118. For example, part of the optical signal (e.g., part of the optical power of the optical signal) may be refracted into the medium 105 (e.g., see FIG. 3). In certain implementations, each type of medium 105 (e.g., air, water, fuel) will cause a different percentage of the optical signal to be refracted, thereby resulting in a respective optical power of the reflected signal. In the example shown in FIG. 3, an optical signal S1 with an initial power level is directed through the prism 112 towards an interface IS between the prism 112 and the surrounding medium 105. The refracted signal S2 extending into the medium 105 from the interface surface IS has a respective power level. The reflected signal S3 extending towards the signal detector 118 has a respective power level.

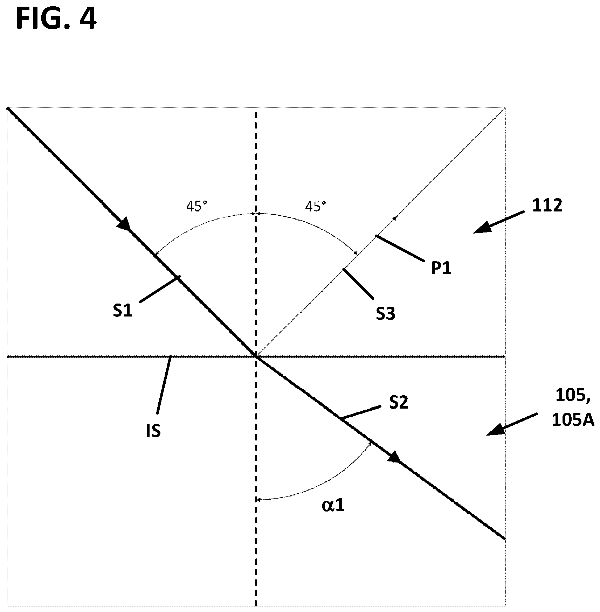

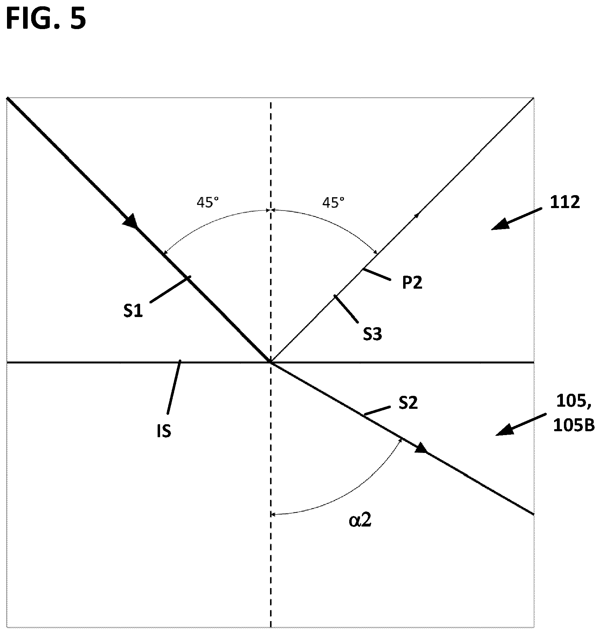

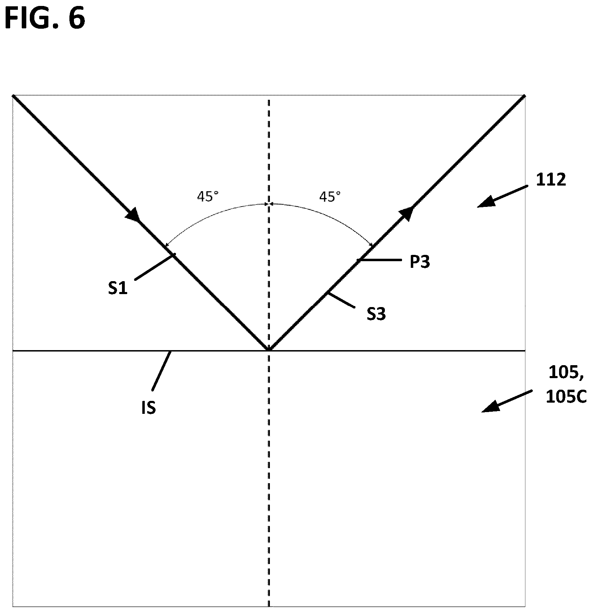

In certain implementations, readings from the signal detector 118 are processed to determine the power level of the reflected signal S3. For example, as shown in FIG. 4, the reflected signal S3 has a first power level P1 when the prism 112 interfaces with a first medium 105A (e.g., fuel). In certain examples, the first power level P1 is less than the initial power level of the signal S1 as part of the signal power has been transferred into the medium 105 via the refracted signal S2. As shown in FIG. 5, the reflected signal S3 has a second power level P2 when the prism 112 interfaces with a second medium 105B (e.g., water). In certain examples, the second power level P2 is different from the first power level P1 due to differences in the coefficients of refraction of the first and second mediums 105A, 105B. In some examples, the second power level P2 is greater than the first power level P1. In other examples, the second power level P2 may be less than the first power level P1. As shown in FIG. 6, the reflected signal S3 has a third power level P3 when the prism 112 interfaces with a third medium 105C (e.g., air). The third power level P3 is different from the first power level P1 and from the second power level P2. In some examples, the third power level P3 is greater than the first power level P1 and the second power level P2 due to differences in the coefficients of refraction of the three mediums 105A, 105B, 105C. In an example, the third power level P3 is equal to the initial power level of the optical signal S1 (i.e., the signal is fully reflected with no portion of the signal refracting into the third medium 105C).

Associations between ranges of power levels and types of media 105A-105C are stored (e.g., in a look up table 134). Accordingly, a signal analyzer 130 (e.g., of the system controller arrangement 120) can match the measured power level of the reflected signal S3 to determine the type of medium 105 disposed at the interface surface IS of the prism 112.

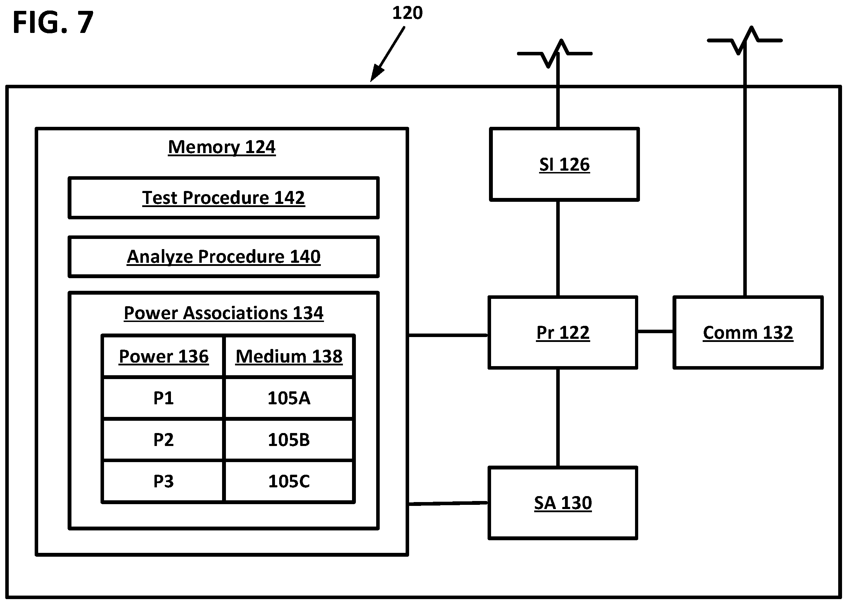

FIG. 7 illustrates an example implementation of a suitable system controller arrangement 120 configured to receive and process the readings of the sensors 110. The system controller arrangement 120 includes a processor 122 and memory 124. The processor 122 includes one or more processor units (e.g., local and/or remote) that can be hardwired or networked together. The memory 124 is configured to store data (e.g., a power association table 134) and/or operational instructions (e.g., signal analysis procedure 140, testing instructions 142, etc.).

In certain implementations, the processor 122 also is coupled to a sensor interface 126 configured to manage operation of the one or more sensors 110 (e.g., turning on and off the signal source 116) at the command of the processor 122. In some examples, the sensor interface 126 manages all of the sensors 110 mounted at the fuel tank 102. In other examples, each sensor 110 may have a respective sensor interface 126 at the system controller arrangement 120. In certain examples, the sensor interface 126 also is configured to receive the sensor readings from the one or more sensors 110.

In certain implementations, the processor 122 also is coupled to a signal analyzer 130 configured to determine a power level of the optical signal S3 received at the signal detector 118. In certain examples, the signal analyzer 130 may have access to the look up table 134 stored in memory 134 to match the power level of the detected signal S3 to a particular medium 105. In some examples, the look up table 134 associates specific power level values with respective mediums 105. In other examples, each medium 105 is associated with a respective range of power level values (e.g., a minimum power level and a maximum power level). In certain examples, the table 134 associates each medium with a percentage indicating the power of the received signal S3 compared to the power of the emitted signal S1 instead of to raw power values.

In certain implementations, the processor 122 also is coupled to a communication interface 132 configured to provide an indication of the medium 105 associated with the power level of the detected signal S3. In certain examples, the communications interface 132 may be coupled (e.g., cabled, wirelessly coupled, etc.) to an alert system or user interface. For example, when the first sensor 110A is determined to interface with water instead of fuel, then the communications interface 132 may send an indication (e.g., a signal to a flight control system, to a user interface such as an email system, etc.) that the fuel tank 102 should be drained and refilled. As another examples, when the third sensor 110C is determined to interface with fuel instead of air, then the communications interface 132 may send an indication to stop filling the fuel tank 102. As another example, when the second sensor 110B is determined to interface with air instead f fuel, then the communications interface 132 may send a low fuel warning (or other such message) to the flight control system, to a user interface, or other interface.

Other configurations of the system controller arrangement 120 are possible. For example, the system controller arrangement 120 can include an optical emitter and/or an optical detector that connect to the sensor 110 using optical fibers or other optical pathways. The optical detector would convert optical signals from the sensor 110 into electrical signals and would direct the electrical signals to the signal analyzer 130. In certain implementations, the matching of the received signal (e.g., the converted electrical signal) to the predetermined power levels can be performed using hard-wired components (e.g., comparators) instead of software-programmed components.

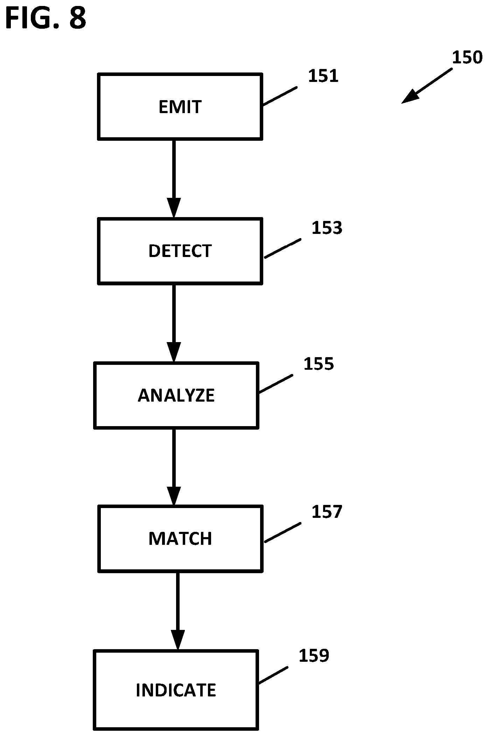

FIG. 8 is a flowchart illustrating an example implementation of a sensor operation method 150 using the sensor 110 and the system controller arrangement 120. The sensor operation method 150 includes a first step 151 at which an optical signal is directed into the prism 112 by the signal source 116. In some examples, the sensor interface 126 sends a control signal to the signal source 116 to emit the signal. In other examples, the sensor interface 126 sends a control signal to an optical emitter to emit light towards the signal source 116. In still other examples, the signal source 116 or optical emitter will emit a light signal unless instructed not to by the sensor interface 126.

At the second step 153, the signal S3 reflected off the interface surface IS is received at the signal detector 118 and the readings from the signal detector 118 are provided to the system controller arrangement 120. The reflected signal S3 is analyzed (e.g., by the signal analyzer 130) at a third step 155 to determine the power level of the reflected signal S3. In certain examples, the power level of the reflected signal S3 will be compared to the power level of the emitted signal to determine what percentage of the initial signal power is received at the detector 118. In certain examples, the reflected signal S3 will be converted into an electrical signal for the comparison.

At a fourth step 157, the determined power level P1, P2, P3 (e.g., measured power level or determined percentage) is matched to a respective medium 105A-105C (e.g., by the signal analyzer 130). In some examples, the determined power level P1, P2, P3 is compared to power levels stored in the look up table 134 to find a match. In other examples, the determined power level P1, P2, P3 is compared to power ranges (e.g., to minimum and maximum power thresholds) stored in the look up table 134 to find a match.

A fifth step 159 reports the medium 105A-105C associated with the matched power or power range. In some examples, the communications interface 132 may send an indication of the medium 105A-105C to a user or to another software process. In other examples, the communications interface 132 may send other types of communication (e.g., a low fuel warning) depending on the determined medium 105.

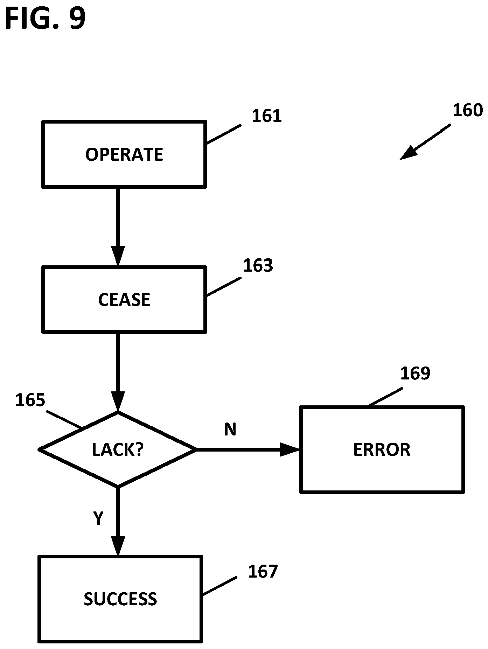

FIG. 9 is a flowchart illustrating an example implementation of a sensor error checking method 160 using the sensor 110 and the system controller arrangement 120. The error checking method 160 starts at a first step 161 at which a sensor 110 is being operated normally (e.g., the optical source 116 is sending an optical signal S1 and the optical detector 118 is receiving the reflected signal S3).

At a step 163, the signal source 116 ceases to send the optical signal S1. For example, the sensor interface 126 may, at a command from the processor 122, send an indication to stop sending an optical signal. In some examples, the sensor interface 126 powers down a laser at the signal source 116. In other examples, the sensor interface 126 powers down a laser at a remote end of an optical fiber aligned with the prism 112.

Determination module 165 checks whether the signal detector 118 receives a signal. If no signal is received at the signal detector 118, then the error checking method 160 concludes successfully at step 167. In an example, an indication of sensor health may be sent to the flight control system or other such system. However, if a signal continues to be received at the signal detector 118, then the error checking method 160 returns an error at step 169. For example, a sensor error may be reported to the flight control system or other such system.

In certain implementations, the above sensor error checking method 160 can be used with the sensors 110 at the fuel tank 102 because a properly installed and functioning sensor 110 will always receive a reflected signal at the signal detector 118 regardless of whether the interface surface IS is disposed in water, fuel, or air. None of the expected mediums 105A-105C that could be contained within the fuel tank 102 will refract the full power of the emitted signal. Accordingly, the lack of signal detection can be attributed solely to the lack of signal emission.

The above described monitoring system and method are usable to track the status of a vehicle fuel tank 102. For example, the monitoring system can be used with a fuel tank 102 of an airplane or other flying craft. Tracking the status of the fuel tank of a flying craft is advantageous due to extreme changes in ambient pressure and temperature during operation. These changes may affect the contents of the fuel tank (e.g., introducing water). By monitoring how much water has entered the tank and how much fuel is left in the tank, a draining and/or refueling schedule can be optimized. Further, using a common sensor design throughout the tank enables cost savings and simplification of support systems. Moreover, by identifying various mediums based on associated non-zero power levels of reflected signals, the monitoring system can be tested while installed.

Certain example implementations of the disclosure are described in the below aspects:
Aspect 1. A method of monitoring a fuel tank, the method comprising:
   providing a plurality of sensors at respective levels within a fuel tank; and
   for each sensor, shining light through a prism of the sensor and obtaining a reflected signal; and
   for each sensor, determining which of at least three mediums is disposed within the fuel tank at the respective level of the sensor based on the reflected signal.
Aspect 2. The method of aspect 1, wherein determining which of at least three mediums is disposed within the fuel tank comprises:
   measuring a predetermined characteristic of the reflected signal; and
   determining which of the at least three mediums is associated with the measurement.
Aspect 3. The method of aspect 2, wherein the predetermined characteristic includes optical power.
Aspect 4. The method of aspect 1, wherein the three mediums include air, water, and fuel.
Aspect 5. The method of any of aspects 1-3, wherein the prism has a coefficient of refraction of between 1.5 and 1.6.
Aspect 6. The method of aspect 4, wherein the prism is formed of silica.
Aspect 7. The method of any of aspects 1-6, further comprising testing whether the sensors are functioning without directly accessing the sensors.
Aspect 8. The method of aspect 7, wherein testing whether the sensors are functioning includes ceasing to shine light through the prism of each sensor and detecting a loss of reflected signal within a predetermined period of time.
Aspect 9. A sensor system for a fuel tank of a vehicle, the sensor system comprising:
   a first optical sensor disposed at a first level within the fuel tank;
   a second optical sensor disposed at a second level within the fuel tank; and
   a third optical sensor disposed at a third level within the fuel tank,
   each of the first, second, and third optical sensors including a signal input path, a signal output path, the respective prism of each of the first, second, and third sensors being configured to:
   reflect a first non-zero portion of a signal from the input path towards the output path when the respective prism is immersed in air;
   reflect a second non-zero portion of a signal from the input path towards the output path when the respective prism is immersed in water;
   reflect a third non-zero portion of a signal from the input path towards the output path when the respective prism is immersed in fuel;
   wherein the first, second, and third non-zero portions are different from each other.
Aspect 10. The sensor system of aspect 9, further comprising:
   a signal source configured to shine a signal along the input path;
   a signal detector configured to receive the reflected signal along the output path; and
   a controller configured to manage the signal source and the signal detector.
Aspect 11. The sensor system of aspect 10, wherein the controller is configured to be configured in an operating mode and a testing mode, wherein the controller causes the signal source to shine the signal along the input path when configured in the operating mode and wherein the controller causes the signal source to cease to shine the signal along the input path when configured in the testing mode.
Aspect 12. The sensor system of aspect 11, wherein the controller is configured to analyze the reflected signal received at the signal detector to determine a characteristic of the reflected signal, wherein the characteristic of the reflected signal differs based on whether the respective prism is immersed in air, fuel, or water.
Aspect 13. The sensor system of aspect 12, wherein the characteristic of the reflected signal includes an optical power of the reflected signal.
Aspect 14. The sensor system of any of aspects 9-13, wherein the prism of each sensor has a common coefficient of refraction.
Aspect 15. The sensor system of aspect 14, wherein the common coefficient of refraction is between 1.4 and 1.6
Aspect 16. The sensor system of aspect 15, wherein the common coefficient of refraction is 1.54.
Aspect 17. The sensor system of any of aspects 9-17, wherein the prism of each sensor is formed of silica.
Aspect 18. The sensor system of any of aspects 9-17, wherein the first optical sensor is disposed closer to a first end of the fuel tank than the second and third optical sensor; wherein the third optical sensor is disposed closer to an opposite second end of the fuel tank than the first and second optical sensor.
Aspect 19. The sensor system of aspect 18, wherein the first optical sensor is positioned to sense water when the fuel tank fills with a predetermined amount of water; and wherein the third optical sensor is positioned to sense air until a fuel level within the fuel tank reaches a predetermined full level.
Aspect 20. A sensor system comprising:
   a prism having a first coefficient of refraction of between 1.5 and 1.6;
   a signal source configured to shine a signal along an input path towards the prism;
   a signal detector configured to receive a reflected signal along an output path from the prism; and
   a controller configured to manage the signal source and the signal detector.

Having described the preferred aspects and implementations of the present disclosure, modifications and equivalents of the disclosed concepts may readily occur to one skilled in the art. However, it is intended that such modifications and equivalents be included within the scope of the claims which are appended hereto.

## Claims

1. A method of monitoring a fuel tank, the method comprising:
a. providing a plurality of sensors at respective levels within a fuel tank; and
b. for each sensor, shining light through a prism of the sensor and obtaining a reflected signal; and
c. for each sensor, determining which of at least three mediums is disposed within the fuel tank at the respective level of the sensor based on the reflected signal.

2. The method of claim 1, wherein determining which of at least three mediums is disposed within the fuel tank comprises:
measuring a predetermined characteristic of the reflected signal; and
determining which of the at least three mediums is associated with the measurement.

3. The method of claim 2, wherein the predetermined characteristic includes optical power.

4. The method of any preceding claim, wherein the three mediums include air, water, and fuel.

5. The method of any of claims 1-4, further comprising testing whether the sensors are functioning without directly accessing the sensors.

6. The method of claim 5, wherein testing whether the sensors are functioning includes ceasing to shine light through the prism of each sensor and detecting a loss of reflected signal within a predetermined period of time.

7. A sensor system for a fuel tank of a vehicle, the sensor system comprising:
a first optical sensor disposed at a first level within the fuel tank;
a second optical sensor disposed at a second level within the fuel tank; and
a third optical sensor disposed at a third level within the fuel tank,
each of the first, second, and third optical sensors including a signal input path, a signal output path, the respective prism of each of the first, second, and third sensors being configured to:
a. reflect a first non-zero portion of a signal from the input path towards the output path when the respective prism is immersed in air;
b. reflect a second non-zero portion of a signal from the input path towards the output path when the respective prism is immersed in water;
c. reflect a third non-zero portion of a signal from the input path towards the output path when the respective prism is immersed in fuel;
d. wherein the first, second, and third non-zero portions are different from each other.

8. The sensor system of claim 7, further comprising:
a signal source configured to shine a signal along the input path;
a signal detector configured to receive the reflected signal along the output path; and
a controller configured to manage the signal source and the signal detector.

9. The sensor system of claim 8, wherein the controller is configured to be configured in an operating mode and a testing mode, wherein the controller causes the signal source to shine the signal along the input path when configured in the operating mode and wherein the controller causes the signal source to cease to shine the signal along the input path when configured in the testing mode.

10. The sensor system of claim 9, wherein the controller is configured to analyze the reflected signal received at the signal detector to determine a characteristic of the reflected signal, wherein the characteristic of the reflected signal differs based on whether the respective prism is immersed in air, fuel, or water.

11. The sensor system of any of claims 7-10, wherein the prism of each sensor has a common coefficient of refraction, wherein the common coefficient of refraction is between 1.4 and 1.6.

12. The sensor system of claim 11, wherein the prism of each sensor is formed of silica.

13. The sensor system of any of claims 7-12, wherein the first optical sensor is disposed closer to a first end of the fuel tank than the second and third optical sensor; wherein the third optical sensor is disposed closer to an opposite second end of the fuel tank than the first and second optical sensor.

14. The sensor system of claim 13, wherein the first optical sensor is positioned to sense water when the fuel tank fills with a predetermined amount of water; and wherein the third optical sensor is positioned to sense air until a fuel level within the fuel tank reaches a predetermined full level.

15. A sensor system comprising:
a prism having a first coefficient of refraction of between 1.5 and 1.6;
a signal source configured to shine a signal along an input path towards the prism;
a signal detector configured to receive a reflected signal along an output path from the prism; and
a controller configured to manage the signal source and the signal detector.
